# EUROPÄISCHE PATENTSCHRIFT

(11) **EP 1 480 915 B1**
(45) Veröffentlichungstag und Bekanntmachung des Hinweises auf die Patenterteilung: **31.08.2005**
(21) Anmeldenummer: 03706582.8
(22) Anmeldetag: 27.02.2003
(51) Int. Cl.: C03B 5/20, C03B 5/26, C03B 5/42, C03B 5/425, C03B 5/44

(54) **MIT EINER GLASSCHMELZE BEAUFSCHLAGTE, GEKÜHLTE BEGRENZUNGSWAND EINER GLASSCHMELZANLAGE**
LIMITING WALL OF A GLASS SMELTING PLANT IMPINGED UPON BY A GLASS MELT AND COOLED
PAROI DE DELIMITATION D'UNE INSTALLATION DE FONTE DE VERRE REFROIDIE ET SOUMISE A L'ACTION DU VERRE FONDU

(30) Priorität: 27.02.2002 DE 10208535
(43) Veröffentlichungstag der Anmeldung: 01.12.2004
(73) Patentinhaber: Schott AG, 55122 Mainz (DE)
(72) Erfinder: BRÜNING, Rudolf DI, . (DE); SCHULTHEIS, Ferdinand, 55131 Mainz (DE); DÜRSCH, Ludwig, 55130 Mainz (DE); HELM, Willibald, 95671 Bärnau (DE)
(74) Vertreter: Fuchs Mehler Weiss & Fritzsche
(86) Internationale Anmeldenummer: PCT/EP2003/002007
(87) Internationale Veröffentlichungsnummer: WO 2003/072515

(56) Entgegenhaltungen:
- DD-A- 281 176
- DD-A- 281 177
- DE-A- 2 745 441
- GB-A- 2 174 985
- RU-C- 2 034 801
- RU-C- 2 036 169
- RU-C- 2 053 961
- US-A- 3 536 470
- DATABASE WPI Section Ch, Week 199735 Derwent Publications Ltd., London, GB; Class L01, AN 1997-381185 XP002242179 & JP 09 165222 A (ASAHI GLASS CO LTD), 24. Juni 1997 (1997-06-24)

## Beschreibung

Die Erfindung betrifft eine mit einer Glasschmelze beaufschlagte Begrenzungswand einer Glasschmelzanlage, insbesondere einen Durchfluss oder einen Wall, welcher im Wesentlichen aus Aluminiumzirkonsilicat oder ähnlichem Feuerfestmaterial (nachfolgend: FF-Material) gefertigt ist und zur Absenkung der Temperatur der Begrenzungswand mit einer Kühlung ausgestattet ist.

Derartige Begrenzungswände sind in der Regel Bestandteil jeder Glasschmelzanlage. Nachdem die Glasschmelze von der Schmelzeinheit bzw. Schmelzwanne in die Läutereinheit bzw. Läuterwanne übergegangen ist, wird sie über einen gekühlten Durchfluss einem Arbeitsbereich zugeführt, in dem sich die weitere Verarbeitung der bereitgestellten Glasschmelze vollzieht.

Der die Läutereinheit mit dem Arbeitsbereich verbindende Durchfluss weist einen gegenüber der die Läutereinheit bildenden Läuterwanne einen kleineren Querschnitt auf, so dass der Durchfluss für die die Schmelzanlage durchfließende Glasschmelze einen Widerstand und insbesondere einen verengten Strömungsquerschnitt darstellt. Dabei ist der Durchfluss in Gestalt eines Tunnels am Boden der Läutereinheit auf gleichem oder tiefergehendem Niveau oder ansteigendem oder abfallendem Niveau auf die Bodenhöhe der angrenzenden Anlagekomponenten angeordnet, da die hier befindlichen Schichten der Glasschmelze aufgrund der höheren Strömungsgeschwindigkeit - und der damit verbundenen homogenen Durchmischung - und des Temperaturgradienten qualitativ hochwertiger sind als die oberen Schichten der in der Läutereinheit befindlichen Glasschmelze und diese qualitativ hochwertigere Glasschmelze vorrangig dem Arbeitsbereich über den Durchfluss zur Verfügung gestellt werden soll. Des Weiteren dient ein in dieser Art angeordneter Durchfluss zur Abtrennung von Gasblasen und damit zum so genannten Läutern der Glasschmelze Aufgrund des verengten Querschnitts des Durchflusses weist die Glasschmelze im Bereich des Durchflusses eine erhöhte Strömungsgeschwindigkeit auf, die wiederum zusammen mit der hohen Temperaturbelastung des mit der Glassschmelze beaufschlagten Durchflusses zu einem erhöhten Verschleiß des FF-Materials, aus welchem der Durchfluss im wesentlichen gefertigt ist, führt. In der Regel ist der Durchfluss aus hochzirkonhaltigem Feuerfestmaterial, Zirkonsilikat, Aluminiumzirkonsilikat und/oder Korund dergleichen gefertigt.

Dieser Verschleiß durch den Kontakt mit der Glasschmelze wird in nachteiliger Weise dadurch unterstützt, dass es am Austritt des Durchflusses, an dem sich der Strömungsquerschnitt wieder vergrößert, zu Rückströmungen kommt und sich im Durchfluss Wirbel und Walzen ausbilden, die zusätzlich zu einer Abnutzung und Aushöhlung des Steins beitragen.

Der Verschleiß führt auf Dauer zur Zerstörung des Durchflusses infolge Materialabtrag. Der Durchfluss müsste beim Auswechseln eine Temperatur von etwa 1000°C aufweisen, da der Stein, aus welchem der Durchfluss gefertigt ist, hinsichtlich seines Wärmeausdehnungsverhaltens die Besonderheit aufweist, dass sein Wärmeausdehnungskoeffizient in Abhängigkeit von der vorliegenden Temperatur sein Vorzeichen ändert.

Aufgrund eines zunächst positiven Wärmeausdehnungskoeffizienten schrumpft der Stein zunächst bei einer Temperaturerhöhung. Im Bereich zwischen 800°C und 1200°C ändert sich dann sein Verhalten in der Art, dass er erst ab 1200°C wieder beginnt sich auszudehnen. Aus diesem Grund müsste die Temperatur des Steins beim Aus- bzw. Einbau während der Laufzeit der Glasschmelzanlage auf über 1000°C gehalten werden, da eine weitere Abkühlung und damit eine Ausdehnung des Steins dazu führen würde, dass Steine der Wanne bzw. Schmelzanlage brechen würden. Die gemachten Ausführungen zeigen, dass - aufgrund der zu berücksichtigenden Temperaturverhältnisse - sich der Ein- und Ausbau eines Durchflusses nicht nur als äußert komplex und aufwendig darstellt, sondem auch mit Gefahren für die damit beschäftigten Personen verbunden ist. Es ist daher ein Ziel der Konstrukteure, die Standzeit des Durchflusses weitestgehend zu erhöhen und damit die Häufigkeit eines Ein- bzw. Ausbaus zu senken bzw. die Haltbarkeit so weit zu erhöhen, dass eine Reparatur erst mit dem Neubau der Glasschmelzanlage einhergeht.

Des Weiteren geht das infolge des Verschleißes aus dem Durchfluss herausgelöste Material, insbesondere der vorzugsweise verwendete Zirkonsilkatstein, in die Glasschmelze über und führt zu Schlieren und anderen Glasfehlem in der Glasschmelze. Im ungünstigsten Fall bildet aus dem Durchfluss Herausgelöstes und dann nicht aufgelöstes Material in der Glasschmelze Knoten, was dem primären Ziel einer möglichst homogenen Durchmischung der Schmelze entgegensteht und zu einer minderwertigen Glasschmelze sowie zu einem erhöhten Ausschuss in der Produktion führt.

Nach dem Stand der Technik wird versucht, den Verschleiß durch eine externe Luftkühlung zu mindern und damit die Standzeit des Durchflusses zu erhöhen (Lehrbuch: Bau von Glasschmelzöfen, Prof. Trier). Die Glasschmelze hat in der Regel im Bereich des Durchflusses eine Temperatur von etwa 1600°C, so dass ein ungekühlter Durchfluss zumindest an der der Glasschmelze zugewandten und von dieser beaufschlagten Seite ebenfalls dieselbe Temperatur von etwa 1600 °C annimmt. Bei einer Dicke des Durchflusses von beispielsweise 250 mm nimmt die Temperatur dann über den Stein bis auf 600-700°C zur Oberseite des Durchflusses hin ab.

Wenn die Standzeit eines ungekühlten Durchflusses etwa zwei Jahre beträgt, so beläuft sie sich mit der nach dem Stand der Technik eingesetzten Luftkühlung bereits auf drei Jahre. Bei der eingesetzten Luftkühlung wird ein Luftstrahl auf die Außenseite des Durchflusses geleitet und damit durch Konvektion dem Stein Wärme entzogen. Infolge der geringeren Temperaturbelastung wird der Verschleiß verringert und ihm damit entgegengewirkt. Obwohl die Standzeit des Durchflusses infolge des Einsatzes dieser Kühlung bereits um bis zu 50% erhöht werden konnte, besteht dennoch Bedarf die Standzeit weiter zu erhöhen.

In einigen Glasschmelzanlagen werden auch Durchflüsse zwischen der Schmelzeinheit und der Läutereinheit vorgesehen. Dieser die Schmelzwanne mit der Läuterwanne verbindende Durchfluss wird in der Regel mittels zweier Querwände gebildet, die jeweils von einer der zwei gegenüberliegenden Begrenzungswände der Wannen, welche in Hauptströmungsrichtung der Glasschmelze verlaufen, in die Wannen und auf einander zu verlaufen und zwischen ihren beiden Stirnseiten einen Durchfluss ausbilden, durch den die Glasschmelze beim Übergang von der Schmelzwanne in die Läuterwanne hindurchfließt. Dieser Durchfluss ist häufig nicht wie der oben zuerst erläuterte Durchfluss als Tunnel ausgebildet, sondern nach oben hin offen und in der Regel nicht - zumindest nicht kontinuierlich - über seine gesamte Höhe mit Glasschmelze beaufschlagt.

Der auf diese Weise durch die zwei Querwände gebildete Durchfluss ist ebenfalls einer erhöhten Abnutzung ausgesetzt. Auch im Bereich dieses Durchflusses kommt es infolge der erhöhten Strömungsgeschwindigkeit aufgrund des sich verengenden Strömungsquerschnittes im Durchfluss zu einem übermäßigen Materialabrieb. Die Problematik ergibt sich analog aus den oben gemachten Ausführungen, wobei die Nachteile im Wesentlichen den ausführlich geschilderten Nachteilen des zuerst behandelten Durchflusses ähnlich sind.

Auch bei dieser Art des Durchflusses ist es ein Ziel der Konstrukteure, die Standzeit der den Durchfluss bildenden Begrenzungswände zu erhöhen und den Materialeintrag in die Glasschmelze zu minimieren. Beides kann nur mit einer Verringerung des Materialabriebes zielführend erreicht werden.

Da diese Variante des Durchflusses aufgrund seiner exponierten Lage in der Glasschmelzanlage keinen von außerhalb der Anlage zugänglichen Bereich aufweist, an dem mittels der herkömmlichen Luftkühlung Wärme abgeführt werden könnte, wird hier notgedrungen ein hoher Verschleiß d.h. eine geringe Standzeit des Durchflusses als unvermeidbar akzeptiert. Die Standzeit dieses ungekühlten Durchflusses beträgt nur ein Jahr, wobei nicht nur die fehlende Kühlung sondem auch die unmittelbare Nähe des Durchflusses zu der Schmelzeinheit zu einer besonders hohen, insbesondere thermischen Belastung dieses Durchfluss führt. Das Problem der nur sehr geringen Standzeit ist hier somit noch gravierender als bei dem zuerst behandelten Beispiel, d.h. bei dem Durchfluss der die Schmelzeinheit mit der Läutereinheit verbindet.

Es wurden auch keine Versuche unternommen, eine Kühlung in der Glasschmelzanlage vorzusehen, mit der diese Art von Durchfluss durch gezielte Konvektion mittels eingebrachter Luft gekühlt werden könnte. Das würde auch dem primären Ziel entgegenstehen, in der Schmelzwanne, in welcher selbst Brenner zum Eintrag eines ausreichend hohe Wärmestromes vorgesehen sind, eine hohe Temperatur sicherzustellen. Die Anordnung von Brennern zum Aufheizen der Schmelze einerseits und das Einbringen von Luft zur Kühlung anderseits sind zwei konträre, nicht gleichzeitig zu realisierende Zielvorgaben.

Eine dritte Variante einer mit einer Glasschmelze beaufschlagten Begrenzungswand einer Glasschmelzanlage weist ein spezieller Glasschmelzofentyp auf. Hier ist zwischen der Schmelzeinheit und der Läutereinheit ein Wall angeordnet. Dieser Wall erstreckt sich quer zur Hauptströmungsrichtung der Glasschmelze zwischen den seitlichen Begrenzungswänden und wird durch eine aus Stein aufgebaute Wand gebildet. Dieser Wall wird dann entweder von der Glasschmelze überströmt oder weist einen oder mehrere Durchflüsse auf. Die Problematik ist dieselbe wie bei den bereits ausführlich erläuterten Durchflüssen, wobei auch hier die Standzeit wie bei dem zuletzt behandelten Durchfluss nur ein Jahr beträgt.

Aus der GB-A-2 174 985 ist im Rahmen der Glasherstellung ein feuerfester Wall mit einer im Inneren geführten Kühlung bekannt, in der ein flüssiges Medium für die Kühlung des Blockes sorgen soll. Allerdings steht hierbei weniger die Verlängerung der Lebensdauer des Walls im Mittelpunkt als vielmehr die Herabsetzung des Brennstoffverbrauches.

Im Rahmen der vorliegenden Erfindung werden die drei genannten Varianten, die Durchflüsse und der Wall bzw. die Wände, die sie bilden, unter dem Begriff der "mit einer Glasschmelze beaufschlagte Begrenzungswand einer Glasschmelzanlage" subsumiert, wobei damit keine abschließende Aufzählung gegeben werden soll.

Eine Begrenzungswand einer Glasschmelzanlage ist bekannt aus der DD 281177 A. Diese weist zur Absenkung der Temperatur der Begrenzungswand eine zumindest teilweise in die Begrenzungswand angeordnete Kühlung auf. Hierzu sind in der Begrenzungswand Bohrungen zur Aufnahme von kühlmediumführenden Rohren vorgesehen.

Wenn diese Begrenzungswand auch eine Kühlung aufweist und insofern eine längere Standzeit haben mag, ist kein Kontrollmechanismus vorgesehen, mit welchem die Rohre auf Korrossion hin kontrolliert werden können.

Auch den Druckschriften GB-A-2-174985, US-A-3536470, RU-C-2053961, DE 2745441 A und RU-C-2034801 ist hierüber nichts zu entnehmen.

Vor diesem Hintergrund ist es die Aufgabe der vorliegenden Erfindung eine mit einer Glasschmelze beaufschlagte Begrenzungswand einer Glasschmelzanlage, insbesondere einen Durchfluss und einen Wall, bereitzustellen, welcher eine erhöhte Standzeit gegenüber den aus dem Stand der Technik bekannten Begrenzungswänden aufweist. Darüber hinaus soll eine Zustandsüberprüfung der Begrenzungswand möglich sein. Darüber hinaus soll ein Verfahren zum Schmelzen von Glas mit mindestens einer Begrenzungswand angegeben werden, aufgrund dessen Durchführung die Standzeit der Begrenzungswand erhöht wird.

Gelöst wird diese Aufgabe durch eine Begrenzungswand, die dadurch gekennzeichnet ist, dass die Rohre derart in der Begrenzungswand angeordnet sind, dass auch nach einem korrosiven Abtrag der Begrenzungswand durch die Glasschmelze diese an den Rohren oder in unmittelbarer Nähe der Rohre erstarrt und die erstarrte Glasschmelze im wesentlichen die Form und Funktion der Begrenzungswand übernimmt und dass sich die Rohre zur Korrosionkontrolle wenigstens teilweise drehen lassen.

Mittels der erfindungsgemäßen, innerhalb der Begrenzungswand angeordneten Kühlung konnte beispielsweise die Standzeit eines Durchflusses, welcher die Läutereinheit mit einem sich anschließenden Arbeitsbereich verbindet, auf vier bis sechs Jahre erhöht werden. Der Materialabtrag kann gezielt durch die Anordnung der Kühlung beeinflusst werden. So können besonders hoch belastete Bereiche stärker gekühlt werden als weniger stark belastete Bereiche. Durch eine Anordnung der Kühlung in der Nähe der mit der Glasschmelze beaufschlagten Außenfläche des Durchflusses, d.h. der Grenzfläche zwischen Durchfluss und Glasschmelze, kann der Verschleiß stark reduziert werden.

Es hat sich gezeigt, dass die Temperatur des Steins im Bereich der Grenzfläche von etwa 1600°C auf bis zu 1100°C heruntergekühlt werden kann, was als maßgeblich für den erzielten Erfolg angesehen wird. Dabei beträgt anfänglich d.h. bei einem noch neuen und nicht abgeriebenen Stein die Temperatur in der Grenzfläche beispielsweise 1500°C, wohingegen nach einer gewissen Betriebsdauer und bereits stattgefundenem Verschleiß die Grenzfläche immer näher an die Kühlung rückt und Temperaturen von bis zu 1100°C in der Grenzfläche erreicht werden.

Des Weiteren wurde beobachtet, dass es infolge des - immer noch stattfindenden - Verschleißes nicht zur Freilegung der Kühlung selbst kommt. D.h. es trat nicht der Fall ein, dass soviel Material abgetragen wurde, dass die Kühlung direkt mit Glasschmelze beaufschlagt wurde, sie also gewissermaßen freilag. Stattdessen verblieb in sämtlichen Versuchen immer eine genügend dicke Schicht aus Stein um die Kühlung herum, die die eigentliche Kühlvorrichtung von der Glasschmelze trennt.

Die erfindungsgemäße Kühlung bzw. Ausbildung der Begrenzungswände ermöglicht erstmals eine Kühlung des Walls und eines zwischen der Schmelzeinheit und der Läutereinheit angeordneten Durchflusses, der bisher aufgrund der fehlenden Zugänglichkeit von außen, ungekühlt blieb.

Die Bohrungen in der Begrenzungswand werden im übrigen vorzugsweise mit einem Diamantbohrer in die Begrenzungswand eingebracht.

Dadurch, dass die Begrenzungswand mit Rohren ausgestattet wird, wird eine hermetische Abschottung der Kühlung erreicht. Eine Benetzung der Begrenzungswand mit dem Kühlmedium bzw. eine Durchtränkung wird auf diese Weise vermieden. Des Weiteren wird verhindert, dass das Kühlmedium den Stein der Begrenzungswand mit weitgehend monolithischem Aufbau in seiner Standfestigkeit schwächt oder sogar an deren Außenseiten austritt und in die Glasschmelze übergeht. Das den Stein durchströmende Kühlmedium kann zudem keine Kräfte, insbesondere keine Schubspannungen infolge seiner Strömungsgeschwindigkeit auf den Stein bzw. die Innenwand der mindestens einen Bohrung ausüben. Ein durch das Kühlmedium selbst verursachter Abrieb findet nicht statt.

Eine in die Begrenzungswand eindringende Glasschmelze kann aufgrund der als Barriere wirkenden Rohre nicht mit dem Kühlmedium in Kontakt kommen.

Durch die Anordnung der zumindest einen Bohrung und des zumindest einen Rohres im Stein und ihrer Ausbildung zu einer internen Kühlung, wird die Möglichkeit geschaffen unmittelbar in der Nähe des Bereiches, in dem der Wärmeeintrag durch die Glasschmelze erfolgt, effektiv zu kühlen und für ein Temperatumiveau in der Grenzfläche zu sorgen, das unter Verwendung der herkömmlichen extemen Luftkühlung nicht realisierbar ist. Solange die Rohre noch drehbar sind, ist der Abrieb des Feuerfestmaterials noch nicht soweit fortgeschritten, dass Glas bereits an den Rohren anliegt. Dieses Merkmal dient der Zustandsüberprüfung der Begrenzungswand und der Abschätzung hinsichtlich der verbleibenden Standzeit.

Als Material für die Begrenzungswand kommt vorzugsweise Aluminiumzirkonsilikat, hochzirkonhaltiges Feuerfestmaterial, schmelzgegossen oder aber Zirkonsilikat in gepresster Form zum Einsatz.

Gemäß einer besonders bevorzugten Ausführungsform ist vorgesehen, dass zwischen den Rohren und Begrenzungswand in den Bohrungen Abstandshalter angeordnet sind. Diese Abstandshalter definieren einen Zwischenraum zwischen den Rohren und dem Feuerfestmaterial der Begrenzungswand zwecks einer zusätzlichen Wärmeabfuhr über die darin enthaltene Luft. Es wird für den zusätzlichen Wärmeabtransport in dem erwähnten Zwischenraum ein Luftstrom erzeugt.

Ein ähnliches Ziel wird dadurch verfolgt, dass gemäß einer weiteren bevorzugten Ausführungsform an die Rohre zur Korrosionskontrolle ein Potential und in der Glasschmelze ein Gegenpotential angelegt ist. Mit dieser Maßnahme kann eine Restlaufzeit angegeben werden für den worst case, dass der Abrieb bereits soweit fortgeschritten ist, dass Glas bereits in die unmittelbare Nähe der Rohre vorgedrungen ist. Es lässt sich die Zeit für einen gewissen Notlauf abschätzen, der durchaus eine Zeitspanne von ca. einem halben Jahr ausmachen kann, innerhalb dessen die Vorbereitungen für einen Austausch vorgenommen werden können.

Vorteilhaft sind Ausführungsformen der Begrenzungswand, bei denen die mindestens eine Bohrung zumindest bei 20°C einen größeren Durchmesser als das ein Kühlmedium führende Rohr aufweist. Günstig an dieser Variante ist, dass zusätzliche Beanspruchungen der Begrenzungswand, welche durch ein unterschiedliches Wärmeausdehnungsverhalten des Steins einerseits und des mindestens einen Rohres anderseits hervorgerufen werden könnten, vermieden werden. Da der Stein bei einer Temperaturerhöhung in der Regel zunächst schrumpft und die in ihm angeordnete Bohrung diesem Schrumpfvorgang folgt und folglich ihren Querschnitt verringert, kann ein im Kaltzustand nahezu spielfrei eingepasstes Rohr zu einer Beschädigung oder sogar Zerstörung d.h. Sprengung der Begrenzungswand bei Betriebsaufnahme bzw. Temperaturerhöhung führen.

Günstig sind Ausführungsformen der Begrenzungswand, bei denen die mindestens eine Bohrung zumindest bei 20°C einen Durchmesser aufweist, der 10 bis 20% größer ist als der des ein Kühlmedium führenden Rohres. Diese Differenz zwischen dem Durchmesser der mindestens einen Bohrung und dem mindestens einen Rohr bietet eine ausreichende Sicherheit gegenüber den zuvor beschriebenen, durch das verschiedene Wärmeausdehnungsverhalten hervorgerufenen zusätzlichen Belastungen der Begrenzungswand und macht eine genaue Betrachtung der Vorgänge bei Temperaturerhöhung im Rahmen der konstruktiven Auslegung überflüssig, so dass Zeit und Kosten reduziert werden.

Vorteilhaft sind Ausführungsformen der Begrenzungswand, bei denen das Rohr ein Walzstahlrohr oder Flussstahlrohr, insbesondere ein aus St37 gefertigtes Rohr ist. Diese Rohre sind handelsüblich und es handelt sich bei ihnen nicht um spezielle, hochbelastbare Werkstoffe, so dass auch durch ihre Verwendung eine kostensparende Lösung gewährleistet wird. Des Weiteren werden zu ihrer Be- und Verarbeitung keine speziellen Werkzeuge benötigt

Vorteilhaft sind Ausführungsformen der Begrenzungswand, bei denen als Kühlmedium eine nicht brennbare Flüssigkeit vorgesehen ist, wobei vorzugsweise Wasser vorgesehen ist. Aufgrund der in der Glasschmelzanlage vorliegenden prinzipbedingt hohen Temperaturen ist der Gefahr einer Entzündung entgegenzuwirken, was durch die Verwendung eines nicht brennbaren Kühlmediums gewährleistet wird. Dabei wird vorteilhafterweise eine Flüssigkeit eingesetzt, da die spezifische Wärmekapazität von Flüssigkeiten um ein Vielfaches höher ist als die von Gasen, so dass mittels einer Kühlflüssigkeit ein wesentlich höherer Wärmestrom, d.h. eine größere Wärmemenge pro Zeiteinheit, abgeführt werden kann.

Wasser als Kühlmedium ist hier eine preiswerte und leicht verfügbare Flüssigkeit. Des Weiteren brauchen keine besonderen Bestimmungen im Umgang mit dieser Flüssigkeit beachtet zu werden. Es entfallen Sicherheitsvorkehrungen und eine spezielle Schulung des Personals.

Das erfindungsgemäße Verfahren zum Schmelzen von Glas in einer Glasschmelzanlage mit mindestens einer Begrenzungswand, in der Bohrungen zur Aufnahme von Kühlmedium führenden Rohren vorgesehen sind, sieht vor, dass die Rohre derartig in der Begrenzungswand angeordnet sind, dass auch nach einem korrosiven Abtrag der Begrenzungswand durch die Glasschmelze diese an den Rohren oder in unmittelbarer Nähe der Rohre erstarrt und die erstarrte Glasschmelze im wesentlichen die Form und Funktion der Begrenzungswand übernimmt. Dies Verfahren ist so ausgelegt, dass die Begrenzungswand eine ausgesprochene Notlaufeigenschaft hat nach einem bestimmten Grad an bereits erfolgter Korrosion.

Im Folgenden wird die Erfindung anhand mehrerer Ausführungsbeispiele gemäß den Zeichnungsfiguren näher erläutert. Hierbei zeigt:
- Fig. 1: eine schematische Darstellung einer ersten Ausführungsform einer als Durchfluss ausgebildeten Begrenzungswandung, die eine Läutereinheit mit einem Arbeitsbereich verbindet, im Längsschnitt, und
- Fig. 2: eine schematische Darstellung einer zweiten Ausführungsform einer als Wall ausgebildeten Begrenzungswand, die als eine Querwand die Schmelzeinheit von der Läutereinheit trennt, im Querschnitt,
- Fig. 3: die Darstellung einer weiteren Ausführungsform einer als Wall ausgebildeten Begrenzungswand mit Abstandshaltern zwischen den Rohren und den Bohrungswandungen,
- Fig. 4: eine schematische Darstellung eines Walls,
- Fig. 5: eine weitere schematische Darstellung eines Durchflusses,
- Fig. 6: die Darstellung einer weiteren Ausführungsform eines Durchflusswalls gemäß einer weiteren Ausführungsform,
- Fig. 7: eine noch weitere Ausführungsform eines Durchflusswalles,
- Fig. 8: eine weitere Ausführungsform eines Walls mittels einem Doppelwandrohr,
- Fig. 9: die Darstellung eines von starker Korrosion beeinträchtigten Walls, und
- Fig. 10: die Darstellung eines von Korrosion beeinträchtigten Durchflusses.

Nachfolgend sind entsprechende Teile mit denselben Bezugszeichen versehen.

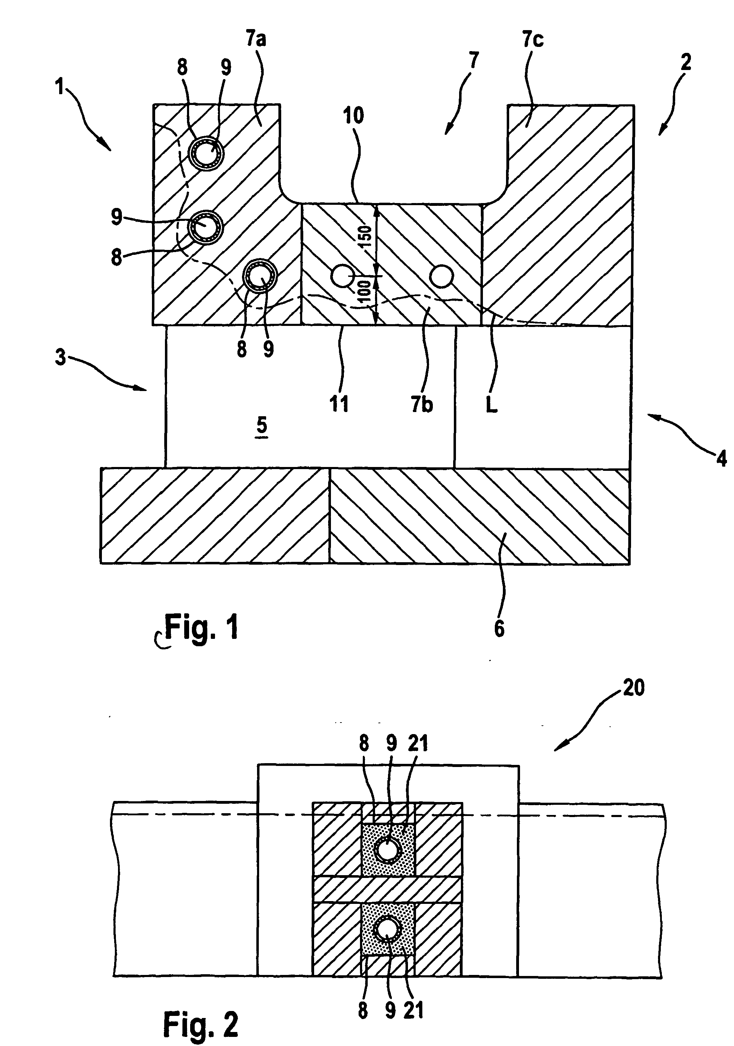

Figur 1 zeigt in einer schematischen Darstellung eine erste Ausführungsform einer als Durchfluss 1 ausgebildeten Begrenzungswandung 2 im Längsschnitt, wobei der Durchfluss eine Läutereinheit mit einem Arbeitsbereich (beides nicht dargestellt) verbindet.

Die hochtemperierte Glasschmelze verlässt die links vom Durchfluss 1 liegende Läutereinheit und tritt an der am Boden der Wanne angeordneten Eintrittsöffnung 3 in den Durchfluss 1, der von ihr durchströmt wird. Sie verlässt den Durchfluss 1 durch die Austrittsöffnung 4, um in den Arbeitsbereich zu gelangen.

Der Durchfluss wird durch seine beiden Seitenwände 5, durch den Boden 6 und die Decke 7 begrenzt. Sie bilden die Begrenzungswände des Durchflusses, wobei die Decke 7 u-förmig ausgebildet ist. Die Decke 7 ist modular aus drei Deckenteilen 7a, 7b, 7c aufgebaut, wobei zwei Teile - ein Schenkel 7a und ein Längsstück 7b - als erfindungsgemäße Begrenzungswand 2 ausgebildet sind, d.h. über eine interne Kühlung verfügen.

Hierzu sind in dem Schenkel 7a und in dem Längsstück 7b Bohrungen 8 vorgesehen, in denen jeweils ein Rohr 9 angeordnet ist. Zwischen der Bohrung 8 und dem Rohr 9 ist jeweils ausreichend Spiel, damit zusätzliche Beanspruchungen der Begrenzungswand 2, welche durch ein unterschiedliches Wärmeausdehnungsverhalten des Steins einerseits und der Rohre 9 anderseits hervorgerufen werden könnten, vermieden werden. Der Stein schrumpft in der Regel am Anfang einer Temperaturerhöhung und die in ihm angeordneten Rohre 9 dehnen sich entgegen dieser Schrumpfbewegung aus, so dass ein im Kaltzustand nahezu spielfrei eingepasstes Rohr 9 zu einer Beschädigung oder sogar Zerstörung d.h. Sprengung der Begrenzungswand 2 bei Betriebsaufnahme bzw. Temperaturerhöhung führen würde.

Die Rohre 9 sind nicht mittig angeordnet, sondern näher zu der Unterseite 11 der Deckenteile 7a, 7b positioniert. Bei dem in Figur 1 gezeigten Ausführungsbeispiel weist das Längsstück 7b der Decke 7 eine Dicke von 250mm auf, wobei sich die Dicke aus dem vertikalen Abstand der Unterseite 11 von der Oberseite 10 ergibt. Die beiden im Längsstück 7b angeordneten Rohre 9 sind in einer Höhe von 100mm über der Unterseite 11 positioniert. Die Unterseite 11 bildet zugleich die Grenzfläche zwischen Glasschmelze und Durchfluss 1 und damit die Fläche, über die der Wärmeeintrag von der Glasschmelze in den Stein erfolgt.

Die im Stein positionierte, interne Kühlung ist damit wesentlich näher am Ort des Wärmeeintrages als eine herkömmliche Luftkühlung, bei der lediglich ein auf die Oberseite 10 des Durchflusses 1 gerichteter Luftstrahl für einen konvektiven Wärmeübergang vom Stein an die Umgebung sorgt.

Nur im Neuzustand ist der Durchfluss 1 bzw. seine Decke 7 u-förmig geformt. Mit zunehmender Betriebsdauer und fortschreitendem Materialabrieb ändern sich die Konturen des Durchflusses 1, insbesondere die seiner Decke 7. Die Glasschmelze löst im Vorbeifließen Material aus der Decke und verändert so die Unterseite 11 der Decke 7. Die Linie strichpunktiert verdeutlicht die Außenkontur der Decke 7 in der Grenzfläche nach einer Benutzung des Durchflusses 1 in einer Glasschmelzanlage.

Die Unterseite 11 ist dann wellenförmig verformt, wobei sich zwischen den Bohrungen 8 leichte Ausnehmungen ausbilden, wohingegen die Bohrungen 8 selbst immer von einer ausreichenden Steinschicht ummantelt bleiben. An der Eintrittsöffnung 3 ist der Materialabtrag am ausgeprägtesten, da hier die Beanspruchung durch die abrupte Querschnittsverkleinerung, insbesondere die Strömungsumlenkung der Glasschmelze besonders hoch ist. Zu der Austrittsöffnung 4 hin nimmt der Abrieb kontinuierlich ab.

Figur 2 zeigt in einer schematischen Darstellung eine zweite Ausführungsform einer als Wall 20 ausgebildeten Begrenzungswand 2 im Querschnitt. Der Wall 20 trennt in Gestalt einer Querwand die Schmelzeinheit von der Läutereinheit (beides nicht dargestellt). Strichpunktiert ist die Oberfläche der Glasschmelze gekennzeichnet.

Im Wall 20 sind zwei quadratische Bohrungen 8 angeordnet, welche durch einen entsprechenden modularen Aufbau des Walls 20 ausgeformt werden. In diesen Bohrungen 8 ist jeweils ein Rohr 9 angeordnet, wobei zwischen Rohr 9 und Bohrung 8 eine elastische Einbettmasse 21 zur Lagerung des Rohres 9 vorgesehen ist.

Wie bereits in der Beschreibung erwähnt, können auch Durchflüsse zwischen Schmelzeinheit und Läutereinheit vorgesehen werden, die aus zwei Querwänden aufgebaut sind, welche sich an ihren Stirnseiten gegenüberstehen. Zwischen den Stirnseiten der Querwände wird dann ein Durchfluss für die Glasschmelze ausgebildet.

Jede der Querwände kann mit einer internen Kühlung ausgestattet werden, wobei die Querwände im Querschnitt wie der in Figur 2 gezeigte Wall 20 aufgebaut sein können. In diesem Fall dient vorzugsweise eines der beiden Rohre 9 als Kühlmittelzufluss in Richtung der Stirnseite der Querwand, wohingegen das andere der beiden Rohre 9 den Kühlmittelabfluss von der Stirnseite weg bildet und beide Rohre 9 im Bereich der Stirnseite durch ein Verbindungsstück verbunden sind.

Die nachfolgenden Figuren zeigen bevorzugte Ausführungsformen, weswegen auf diese und besonders die Unterschiedsmerkmale eingegangen werden soll.

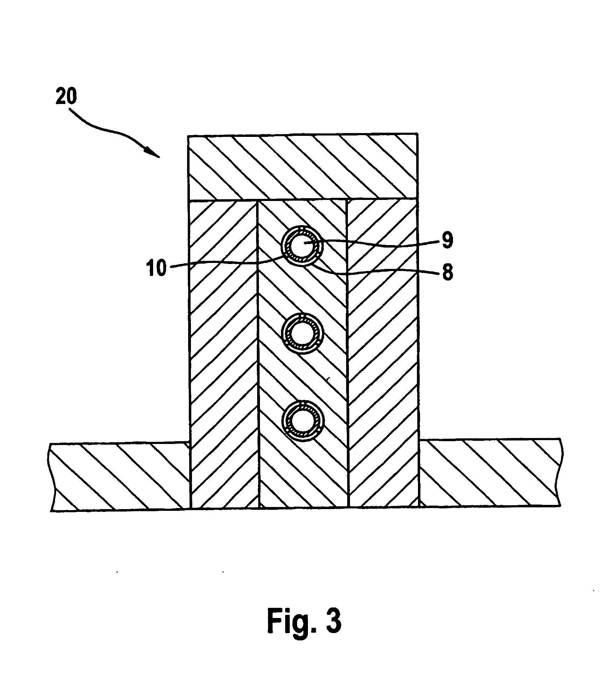

Figur 3 zeigt die schematische Darstellung eines Walls als Begrenzungselement. Im Unterschied zu jenem aus Figur 2 sind hier zwischen den Rohren 9 und der Begrenzungswand in den Bohrungen 8 Abstandshalter 10 angeordnet. Die Abstandshalter definieren so einen Zwischenraum zwischen der Rohrwandung und der Bohrungswandung, welcher im Regelfall mit Luft gefüllt ist. Diese Luft dient für eine zusätzliche Wärmeabführung und somit zu einer nochmals weiter verlängerten Standzeit des Walls.

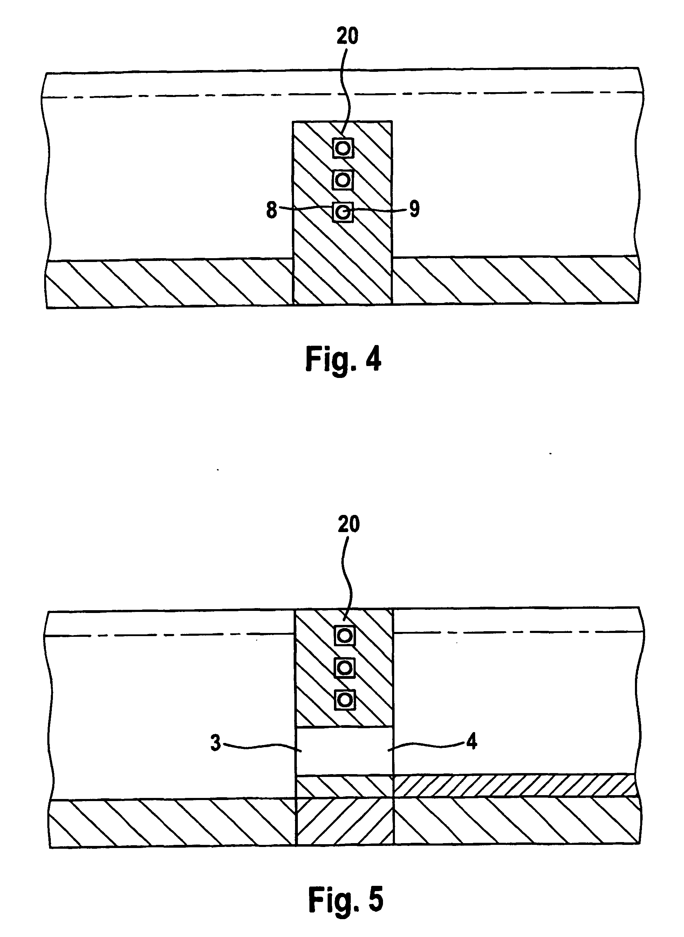

Figur 4 zeigt schematisch nochmals einen Überstromwall 20 mit dem in seinem Inneren angeordneten Kühlsystem.

Im Unterschied zu Figur 4 zeigt Figur 5 schematisch einen Durchflusswall zwischen der Eintrittsöffnung 3 in den Durchfluss und der Austrittsöffnung 4.

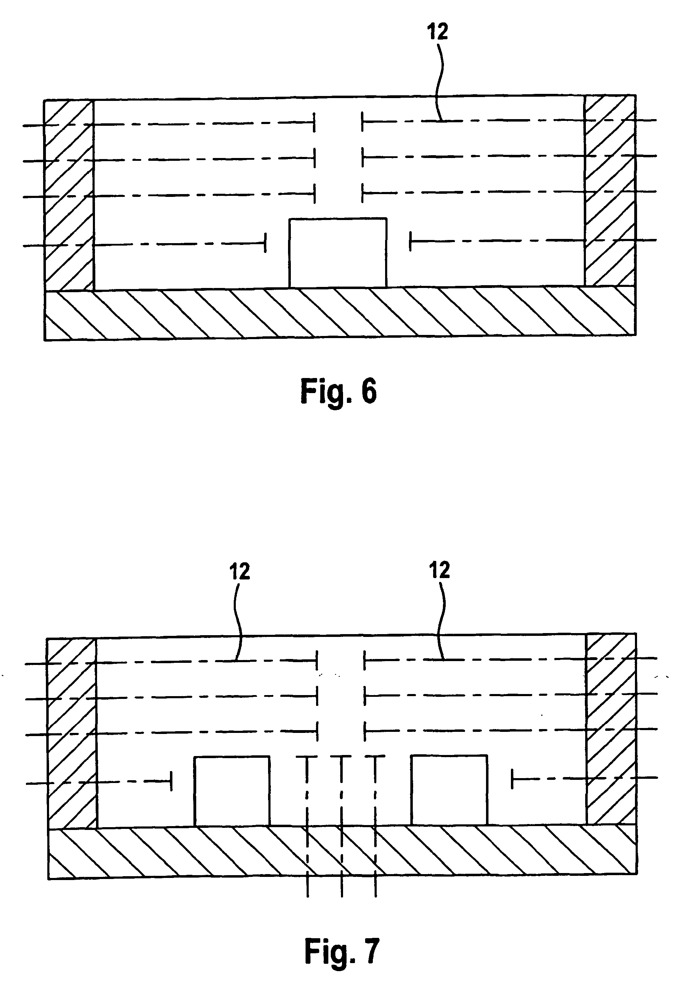

Figur 6 zeigt wiederum schematisch einen Durchflusswall in Fließrichtung der Glasschmelze gesehen. Im Unterschied zu den bislang beschriebenen Ausführungsformen ist das Kühlsystem vorliegend gebildet aus doppelwandigen Rohren 12 mit beispielsweise einem inneren Zulauf und einem äußeren Ablauf. Der Vorteil dieser Doppelrohre ist in einem verringerten Platzbedarf bei der Montage und bei dem Wechsel der Begrenzungswand zu sehen.

Figur 6 zeigt einen einfachen Durchflusswall, Figur 7 hingegen einen doppelten Durchtiusswall.

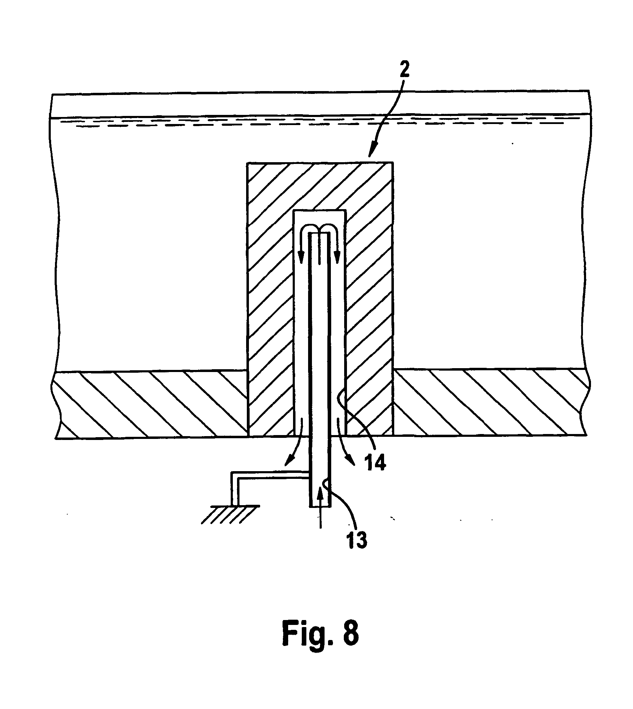

Das Prinzip des Doppelrohres ist schematisch in Figur 8 dargestellt. Der innere Zulauf 13 führt das Kühlmedium bis zum Ende des Doppelrohres, wo das Kühlmedium in den äußeren Ringraum 14 des Doppelrohres tritt, um von dort wieder nach außen zurückzufließen.

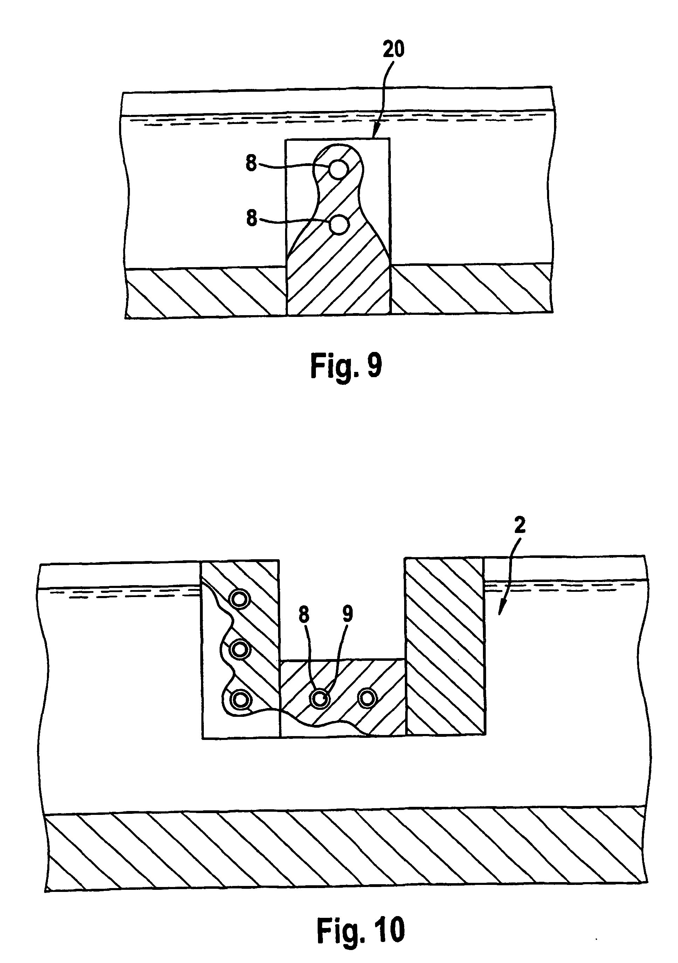

Die Figuren 9 und 10 schließlich zeigen einen Wall 20 bzw. Durchfluss 2 mit bereits erheblichen Abriebserscheinungen. Es ist ein wesentlicher Vorteil, dass die Glasschmelze an den Rohren 9 oder in unmittelbarer Nähe der Rohre erstarrt und diese erstarrte Glasschmelze im Wesentlichen die Form und Funktion der Begrenzungswand übemimmt. Dies veranschaulicht die schematische Darstellung in den Figuren 9 und 10.

## Patentansprüche

1. Mit einer Glasschmelze beaufschlagte Begrenzungswand einer Glasschmelzanlage, wobei zur Absenkung der Temperatur der Begrenzungswand eine zumindest teilweise in die Begrenzungswand angeordnete Kühlung vorgesehen ist, wobei in der Begrenzungswand (2) Bohrungen (8) zur Aufnahme von Kühlmedium führenden Rohren (9) vorgesehen sind, **dadurch gekennzeichnet, dass** die Rohre (9) derart in der Begrenzungswand angeordnet sind, dass auch nach einem korrosiven Abtrag der Begrenzungswand durch die Glasschmelze diese an den Rohren (9) oder in unmittelbarer Nähe der Rohre (9) erstarrt und die erstarrte Glasschmelze im Wesentlichen die Form und Funktion der Begrenzungswand (2) übernimmt und dass sich die Rohre (9) zur Korrosionskontrolle wenigstens teilweise drehen lassen.

2. Begrenzungswand nach Anspruch 1, **dadurch gekennzeichnet, dass** die Begrenzungswand (2) ein Durchfluss oder ein Wall ist.

3. Begrenzungswand nach wenigstens einem der Ansprüche 1 oder 2, **dadurch gekennzeichnet, dass** die Begrenzungswand aus Aluminiumzirkonsilikat besteht.

4. Begrenzungswand nach Anspruch 3, **dadurch gekennzeichnet, dass** die Begrenzungswand aus hochzirkonhaltigem Feuerfestmaterial, schmelzgegossen, besteht.

5. Begrenzungswand nach Anspruch 3, **dadurch gekennzeichnet, dass** die Begrenzungswand aus Zirkonsilikat, gepresst, besteht,

6. Begrenzungswand nach wenigstens einem der Ansprüche 1 bis 5, **dadurch gekennzeichnet, dass** zwischen den Rohren (9) und der Begrenzungswand (2) in den Bohrungen (8) Abstandhalter (10) angeordnet sind.

7. Begrenzungswand nach wenigstens einem der Ansprüche 1 bis 6, **dadurch gekennzeichnet, dass** die Rohre (9) zur Korrosionskontrolle ein Potential und in der Glasschmelze ein Gegenpotential angelegt ist.

8. Begrenzungswand (2) nach einem der Ansprüche 1 bis 7, **dadurch gekennzeichnet, dass** die mindestens eine Bohrung (8) zumindest bei 20°C einen größeren Durchmesser als das ein Kühlmedium führende Rohr (9) aufweist.

9. Begrenzungswand (2) nach Anspruch 8, **dadurch gekennzeichnet, dass** die mindestens eine Bohrung (8) zumindest bei 20°C einen Durchmesser aufweist der 10 bis 20% größer ist als der des ein Kühlmedium führenden Rohres (9).

10. Begrenzungswand (2) nach einem der Ansprüche 1 bis 9, **dadurch gekennzeichnet, dass** das Rohr (9) ein Walzstahlrohr oder Flussstahlrohr, insbesondere ein aus St37 gefertigtes Rohr (9) ist.

11. Begrenzungswand (2) nach einem der Ansprüche 1 bis 10, **dadurch gekennzeichnet, dass** als Kühlmedium eine nicht brennbare Flüssigkeit vorgesehen ist.

12. Begrenzungswand (2) nach Anspruch 11, **dadurch gekennzeichnet, dass** als Kühlmedium Wasser vorgesehen ist.

## Claims

1. Boundary surface of a glass melting plant, which is exposed to a glass melt, a cooling system arranged at least partly in the boundary surface being provided in order to lower the temperature of the boundary surface, bores (8) to accommodate tubes (9) carrying coolant being provided in the boundary surface (2), **characterized in that** the tubes (9) are arranged in the boundary surface such that even after corrosive erosion of the boundary surface by the glass melt, the latter is solidified on the tubes (9) or in the immediate vicinity of the tubes (9) and the solidified glass melt essentially assumes the shape and function of the boundary surface (2), and **in that** the tubes (9) can be at least partly rotated for corrosion monitoring.

2. Boundary surface according to Claim 1, **characterized in that** the boundary surface (2) is a passage or a wall.

3. Boundary surface according to at least one of Claims 1 and 2, **characterized in that** the boundary surface consists of aluminium zirconium silicate.

4. Boundary surface according to Claim 3, **characterized in that** the boundary surface consists of a fusion-cast refractory material with a high zirconium content.

5. Boundary surface according to Claim 3, **characterized in that** the boundary surface consists of pressed zirconium silicate.

6. Boundary surface according to at least one of Claims 1 to 5, **characterized in that** spacers (10) are arranged in the bores (8), between the tubes (9) and the boundary surface (2).

7. Boundary surface according to at least one of Claims 1 to 6, **characterized in that**, for corrosion monitoring, a potential is applied to the tubes (9) and a reference potential is applied in the glass melt.

8. Boundary surface (2) according to one of Claims 1 to 7, **characterized in that** the at least one bore (8) has a larger diameter than a tube (9) carrying coolant, at least at 20°C.

9. Boundary surface (2) according to Claim 8, **characterized in that** the at least one bore (8) has a diameter which is from 10 to 20% larger than that of a tube (9) carrying coolant, at least at 20°C.

10. Boundary surface (2) according to one of Claims 1 to 9, **characterized in that** the tube (9) is a rolled steel tube or a mild steel tube, in particular a tube (9) made of St37.

11. Boundary surface (2) according to one of Claims 1 to 10, **characterized in that** an incombustible liquid is provided as the coolant.

12. Boundary surface (2) according to Claim 11, **characterized in that** the coolant is water.

## Revendications

1. Paroi de délimitation d'une installation de fonte de verre, laquelle paroi est soumise à l'action d'un bain de fusion de verre et dont on abaisse la température au moyen d'un dispositif de refroidissement au moins partiellement agencé en son sein, la paroi de délimitation (2) présentant des alésages (8) de réception de tubes (9) qui conduisent un fluide de refroidissement, **caractérisée en ce que** les tubes (9) sont agencés dans la paroi de délimitation de telle manière que, même après que cette dernière a subi une abrasion par corrosion, le bain de fusion de verre se solidifie sur les tubes (9) ou à proximité immédiate des tubes (9), et le bain de fusion de verre solidifié épousant essentiellement la forme de la paroi de délimitation (2) et en assurant essentiellement la fonction, et **en ce que** les tubes (9) peuvent être tournés au moins partiellement pour en contrôler la corrosion.

2. Paroi de délimitation selon la revendication 1, **caractérisée en ce que** la paroi de délimitation (2) est un passage ou un barrage.

3. Paroi de délimitation selon la revendication 1 ou 2, **caractérisée en ce qu'**elle est constituée de silicate d'aluminium et de zirconium.

4. Paroi de délimitation selon la revendication 3, **caractérisée en ce qu'**elle est constituée d'un matériau réfractaire à haute teneur en zirconium coulé à l'état fondu.

5. Paroi de délimitation selon la revendication 3, **caractérisée en ce qu'**elle est constituée de silicate de zirconium comprimé.

6. Paroi de délimitation selon au moins l'une quelconque des revendications 1 à 5, **caractérisée en ce que** des écarteurs (10) sont agencés dans les alésages (8) entre les tubes (9) et la paroi de délimitation (2).

7. Paroi de délimitation selon au moins l'une quelconque des revendications 1 à 6, **caractérisée en ce qu'**en vue du contrôle de la corrosion, on associe un potentiel aux tubes (9) et un contre-potentiel au bain de fusion de verre.

8. Paroi de délimitation (2) selon l'une quelconque des revendications 1 à 7, **caractérisée en ce qu'**au moins à 20°C, le diamètre de l'au moins un alésage (8) est supérieur à celui du tube (9) qui conduit le fluide de refroidissement.

9. Paroi de délimitation (2) selon la revendication 8, **caractérisée en ce qu'**au moins à 20°C, le diamètre de l'au moins un alésage (8) est supérieur de 10 à 20% à celui du tube (9) qui conduit le fluide de refroidissement.

10. Paroi de délimitation (2) selon l'une quelconque des revendications 1 à 9, **caractérisée en ce que** le tube (9) est un tube (9) fabriqué en acier laminé ou un tube en acier doux et en particulier un tube en St37.

11. Paroi de délimitation (2) selon l'une quelconque des revendications 1 à 10, **caractérisée en ce que** le fluide de refroidissement est un liquide non combustible.

12. Paroi de délimitation (2) selon la revendication 11, **caractérisée en ce que** le fluide de refroidissement est de l'eau.
